(19) Europäisches Patentamt / European Patent Office / Office européen des brevets

(11) **EP 4 776 201 A1**

(12) **EUROPEAN PATENT APPLICATION**
published in accordance with Art. 153(4) EPC

(43) Date of publication:
**15.07.2026 Bulletin 2026/29**

(21) Application number: **24862762.2**

(22) Date of filing: **02.09.2024**

(51) International Patent Classification (IPC):
**G06Q 10/20** (2023.01)     **G06Q 50/08** (2012.01)

(52) Cooperative Patent Classification (CPC):
**G06Q 10/20; G06Q 50/08**

(86) International application number:
**PCT/JP2024/031500**

(87) International publication number:
**WO 2025/053110 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 JP 2023146502**

(71) Applicant: **Hitachi Construction Machinery Co., Ltd.**
**Tokyo 110-0015 (JP)**

(72) Inventors:
• **KONNO Hiroyuki**
  **Tokyo 100-8280 (JP)**
• **IWASAKI Ayato**
  **Tsuchiura-shi, Ibaraki 300-0013 (JP)**
• **TAKEDA Toshiya**
  **Tokyo 110-0015 (JP)**
• **SEKI Daisuke**
  **Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **INSPECTION PLAN CREATION ASSISTANCE DEVICE**

(57)     A standard value is computed from the cumulative number of replaced components and an operation index; a load factor is computed on the basis of a ratio between a value computed for each customer category from the cumulative number of replaced components and the operation index used for computing the standard value, and the standard value; a future operation time is estimated for each machine from an operation history; a maintenance timing of a component is computed for each customer category from the maintenance history and the ratio; a maintenance time to reach the computed maintenance timing of the component is estimated from the future operation time and the maintenance timing of the component; and an inspection time is created on the basis of the estimated maintenance time. Accordingly, it is possible to automatically and more accurately create an inspection plan of a machine with high inspection efficiency at an appropriate timing in consideration of the influence of a load caused by a way of using a machine by a customer.

[FIG. 17]

## Description

Technical Field

The present invention relates to an inspection plan creation support device.

Background Art

As prior art related to diagnosis and drafting of a maintenance plan of various facilities such as production facilities of a factory, social infrastructure facilities, ancillary facilities of a building, transportation facilities, and medical facilities, for example, the following described in Patent Document 1 has been known.

Patent Document 1 discloses a complex diagnosis/maintenance plan support system provided with a target facility, a sensor for measuring diagnosis basis data, a storage section for accumulating maintenance histories of the target facility and the sensor and sensor measurement data, and a diagnosis/maintenance plan support device, in which the diagnosis/maintenance plan support device is provided with a life model estimation section for estimating a life model using a desired maintenance history and sensor data as variable parameters, a risk diagnosis section for calculating failure risks and failure risk prediction values of the target facility and the sensor by using the life model, a complex risk calculation section for calculating a complex risk and a complex risk prediction value associated with abnormalities of the target facility and the sensor from the failure risks and the failure risk prediction values, and a processing section for comparing at least the failure risk prediction values, the complex risk prediction value, and a threshold value with each other to draft a maintenance plan.

Prior Art Document

Patent Document

Patent Document 1: JP-2009-251822-A

Summary of the Invention

Problem to be Solved by the Invention

In the prior art described above, a plan is drafted in which an inspection is conducted when a failure risk predicted by a life model using an operation period of time and the number of starts and stops exceeds a threshold value.

However, the prior art described above has the following problems. That is, for example, in a case where the usage method or the usage environment of the machine largely fluctuates, there is a concern that the accuracy of the prediction result deteriorates. In addition, in a case where the prediction accuracy is low, it is predicted that the inspection plan deviates from the actual usage mode of the machine, which lacks in persuasiveness, and it is conceivable to cause a problem such as taking time to coordinate the inspection time with a customer. Further, it is also conceivable that the inspection efficiency is lowered because the patrol inspection of a plurality of machines geographically separated from each other is not considered.

The present invention has been made in view of the above, and an object thereof is to provide an inspection plan creation support device capable of automatically and more accurately creating an inspection plan of a machine with high inspection efficiency at an appropriate timing in consideration of the influence of a load caused by a way of using a machine by a customer.

Means for Solving the Problem

The present application includes a plurality of means for solving the above-described problem, and an example thereof is an inspection plan creation support device for deciding an inspection time of a machine including: an input device that inputs machine identification information including a customer category indicating a way of using a machine to be inspected, an operation history in which an operation index including time-series data indicating an operation status of the machine is written, and a maintenance history in which a replacement time of a component and cumulative number of replaced components are written; a storage device that stores information input by the input device; a computing device that is configured to compute an inspection plan of the machine on the basis of the information of the storage device; and an output device that outputs a computation result of the computing device to a terminal device, in which the computing device includes: a maintenance standard data computation section that is configured to compute a standard value from the cumulative number of replaced components and the operation index, and compute a load factor on the basis of a ratio between a value computed for each customer category from the cumulative number of replaced components and the operation index used for computing the standard value, and the standard value; and an inspection plan creation section that is configured to estimate a future operation time for each machine from the operation history, compute a maintenance timing of a component for each customer category from the maintenance history and the ratio, estimates a maintenance time to reach the computed maintenance timing of the component from the future operation time and the maintenance timing of the component, and creates an inspection time on the basis of the estimated maintenance time.

Advantages of the Invention

According to the present invention, it is possible to automatically and more accurately create an inspection plan of a machine with high inspection efficiency at an appropriate timing in consideration of the influence of a load caused by a way of using a machine by a customer.

Brief Description of the Drawings

[FIG. 1] FIG. 1 is a functional block diagram for depicting a configuration example of an inspection plan creation support device.
[FIG. 2] FIG. 2 is a flowchart for depicting processing contents of the inspection plan creation support device.
[FIG. 3] FIG. 3 is a diagram for depicting an example of a data structure of an operation history.
[FIG. 4] FIG. 4 is a diagram for depicting an example of a data structure of the operation history after a new index is generated.
[FIG. 5] FIG. 5 is a diagram for depicting an example of a data structure of machine identification information.
[FIG. 6] FIG. 6 is a diagram for depicting an example of a data structure of a maintenance history.
[FIG. 7] FIG. 7 is a diagram for depicting an example of a data structure of a table for creating maintenance standard data.
[FIG. 8] FIG. 8 is a diagram for depicting an example of a data structure of maintenance information.
[FIG. 9] FIG. 9 is a diagram for depicting an example of a data structure of load data.
[FIG. 10] FIG. 10 is a flowchart for depicting processing contents of an inspection plan creation subroutine.
[FIG. 11] FIG. 11 is a diagram for depicting an example of an estimation result of a date.
[FIG. 12] FIG. 12 is a diagram for depicting an example of a data structure of a maintenance plan.
[FIG. 13] FIG. 13 is a diagram for schematically depicting an example of an inspection plan creation method.
[FIG. 14] FIG. 14 is a diagram for depicting an example of a data structure of an inspection plan.
[FIG. 15] FIG. 15 is a diagram for depicting an example of an inspection plan screen.
[FIG. 16] FIG. 16 is a diagram for depicting an example of a data structure of used machine information.
[FIG. 17] FIG. 17 is a diagram for depicting an example of an inspection time adjustment screen.
[FIG. 18] FIG. 18 is a diagram for depicting an example of a data structure of a construction plan.

Modes for Carrying out the Invention

Hereinafter, an embodiment of the present invention will be described with reference to the drawings. It should be noted that, for example, a work machine such as a hydraulic excavator will be referred to as a "machine" and will be described as a target for which an inspection plan is created in the present embodiment, but the present invention is not limited to this and can be applied to other work machines and other inspection targets such as vehicles and power supply facilities.

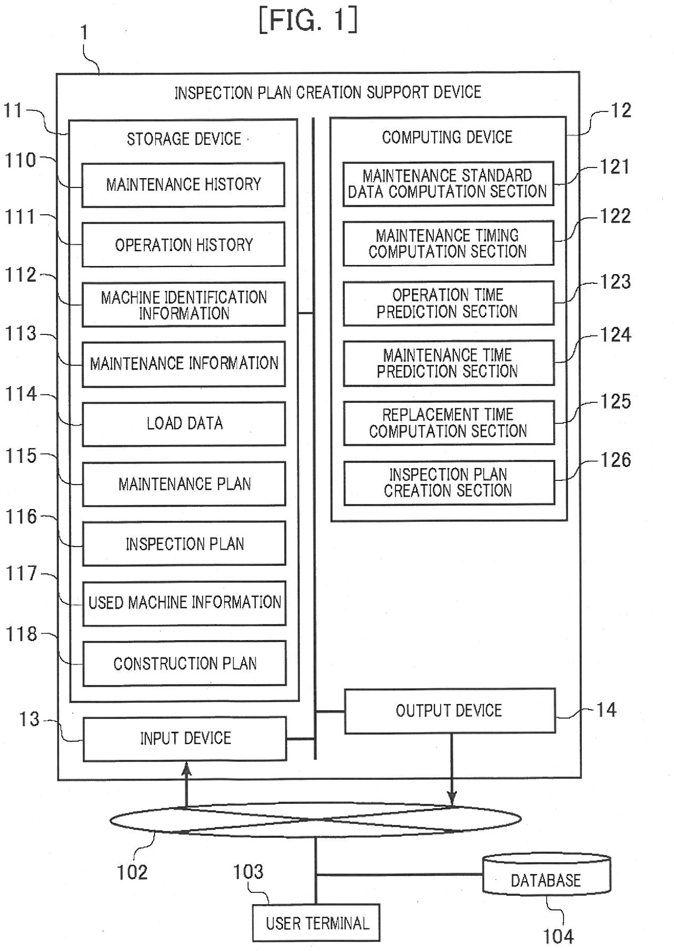

FIG. 1 is a functional block diagram for depicting a configuration example of an inspection plan creation support device according to the present embodiment.
In FIG. 1, an inspection plan creation support device 1 is connected, via a network 102, to a user terminal 103 (terminal device) used by a user and a database 104 in which data is stored.
The user terminal 103 is an information processing device such as a PC (Personal Computer). The user issues an execution instruction for processing to the inspection plan creation support device 1 through the user terminal 103. In addition, the user terminal 103 has a function of displaying information output from the inspection plan creation support device 1 on a screen or the like and presenting it to the user.
The database 104 is, for example, a database or a storage device that accumulates a system such as a map system, a machine operation information system, or ERP (Enterprise Resources Planning), or data conforming thereto.
The network 102 communicatively connects the user terminal 103, the database 104, and the inspection plan creation support device 1 to each other. The network 102 is, for example, any one of a LAN (Local Area Network), a WAN (Wide Area Network), a VPN (Virtual Private Network), and a communication network using a part or whole of a general public line such as the Internet.

The inspection plan creation support device 1 is an information processing device such as a PC or a server computer, and is provided with a storage device 11, a computing device 12, an input device 13 (input interface), and an output device 14 (output interface).

The storage device 11 stores various information of a maintenance history 110, an operation history 111, machine identification information 112, maintenance information 113 (maintenance history), load data 114, a maintenance plan 115, an inspection plan 116, used machine information 117, and a construction plan 118.

The computing device 12 is provided with a maintenance standard data computation section 121, a maintenance timing computation section 122, an operation time prediction section 123, a maintenance time prediction section 124, a replacement time computation section 125, and an inspection plan creation section 126.

Here, a flow of processing executed by the computing device 12 of the inspection plan creation support device 1 will be described.

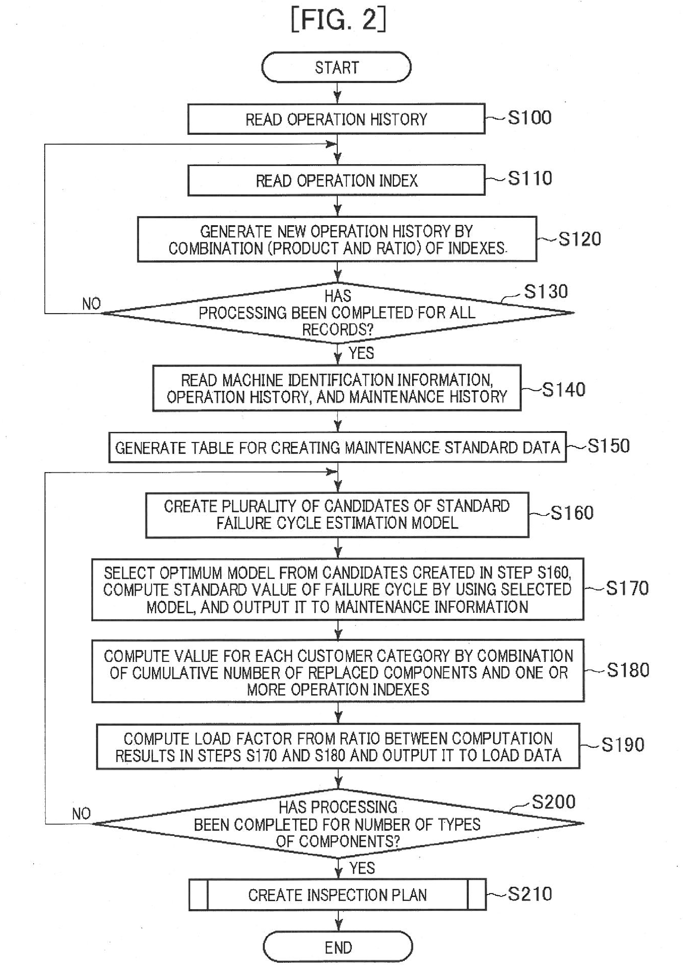

FIG. 2 is a flowchart for depicting processing contents of the inspection plan creation support device.

A series of processing depicted in FIG. 2 is started according to, for example, a start command from the user to the user terminal 103 on the assumption that a predetermined number of maintenance histories 110 and operation histories 111, pieces of machine identification information 112, pieces of used machine information 117, and construction plans 118 are recorded in the database 104. It should be noted that Step S100 to Step S200 in FIG. 2 correspond to processing related to the maintenance standard data computation section 121, and Step S210 corresponds to processing for calling the maintenance timing computation section 122, the operation time prediction section 123, the maintenance time prediction section 124, the replacement time computation section 125, and the inspection plan creation section 126 as subroutines.

In FIG. 2, the computing device 12 first acquires the operation history 111 (Step S100).

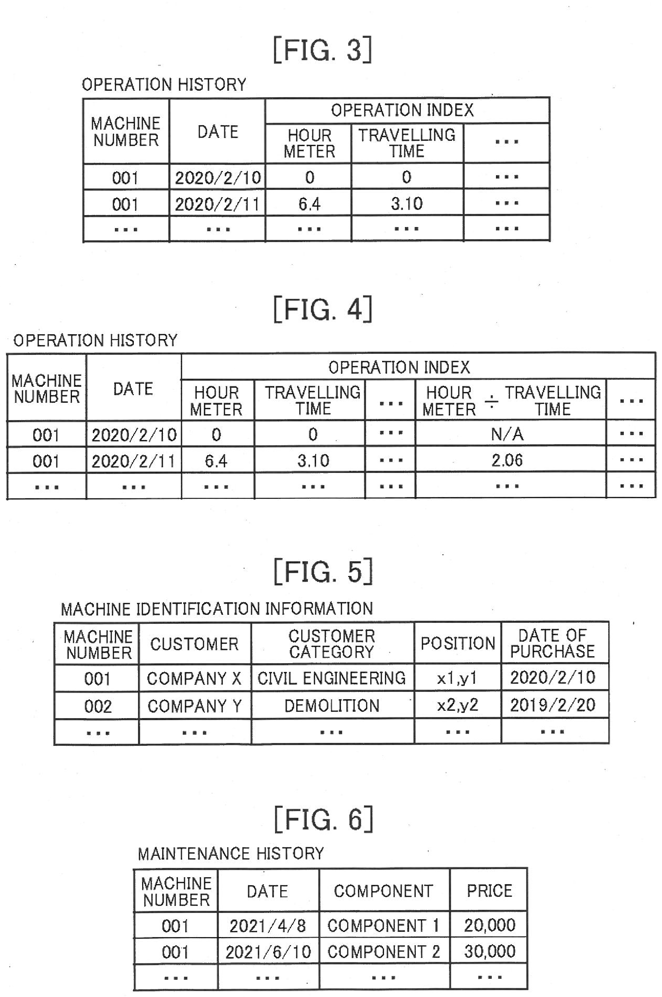

FIG. 3 is a diagram for depicting an example of a data structure of the operation history.

As depicted in FIG. 3, time-series data of the operation status of the machine is stored in the operation history 111, and the operation history 111 is configured with a machine number, a date, and an operation index "an hour meter, a travelling time, and the like." The machine number indicates number information for uniquely identifying the machine. The operation index includes an hour meter for accumulating the driving time of the engine, a travelling time for accumulating the travelling time of the machine, and the like, and indicates the operation status of the machine at the time in the "date" column. For example, an hour meter of 6.4 on 2022/2/11 means that the machine has been driven for a total of 6.4 hours since the machine was newly purchased.

Subsequently, each column of the operation index in the operation history 111 is read for one record (Step S110), and a new index is generated by a combination of products and ratios between the read indexes (Step S120). In Step S120, for example, "hour meter ÷ travelling time" including a combination of ratios between the hour meter and the travelling time is generated as a new index.

FIG. 4 is a diagram for depicting an example of a data structure of the operation history after the new index is generated. It should be noted that in FIG. 4, the value of "hour meter ÷ travelling time" on 2020/2/10 is output as N/A because the travelling time of the denominator is 0 (zero).

Subsequently, it is determined whether or not the processing of Steps S110 to S120 has been repeated for the number of all records, that is, whether or not the processing of Steps S110 to S120 has been completed for all the records (Step S130), and when the determination result is NO, the processing of Steps S110 to S130 is repeated until the determination result becomes YES.

In addition, when the determination result in Step S130 is YES, the machine identification information 112 and the maintenance history 110 are subsequently read (Step S140).

FIG. 5 is a diagram for depicting an example of a data structure of the machine identification information. In addition, FIG. 6 is a diagram for depicting an example of a data structure of the maintenance history.

As depicted in FIG. 5, profile information for each machine number is stored in the machine identification information 112, and the machine identification information 112 is configured with a machine number, a customer, a customer category, a position, and a new-machine purchase date. The "customer" indicates the name of the customer, the customer category indicates information related to a way of using the machine that indicates what kind of work the customer uses the machine for, the "position" indicates the coordinates (for example, the latitude and longitude) of the place where the machine is placed, and the "date of purchase" indicates the date of purchase of the machine. For example, FIG. 5 means that a machine number "001" was purchased by a "company X" on 2020/2/10, a way of using the machine is "civil engineering," and the machine is currently placed at "x1, y1."

As depicted in FIG. 6, components to be maintained in the past and prices are stored in the maintenance history 110, and the maintenance history 110 is configured with a machine number, a date, a component, and a price.

Subsequently, the operation history 111, the machine identification information 112, and the maintenance history 110 are combined to generate a table for creating maintenance standard data (Step S150).

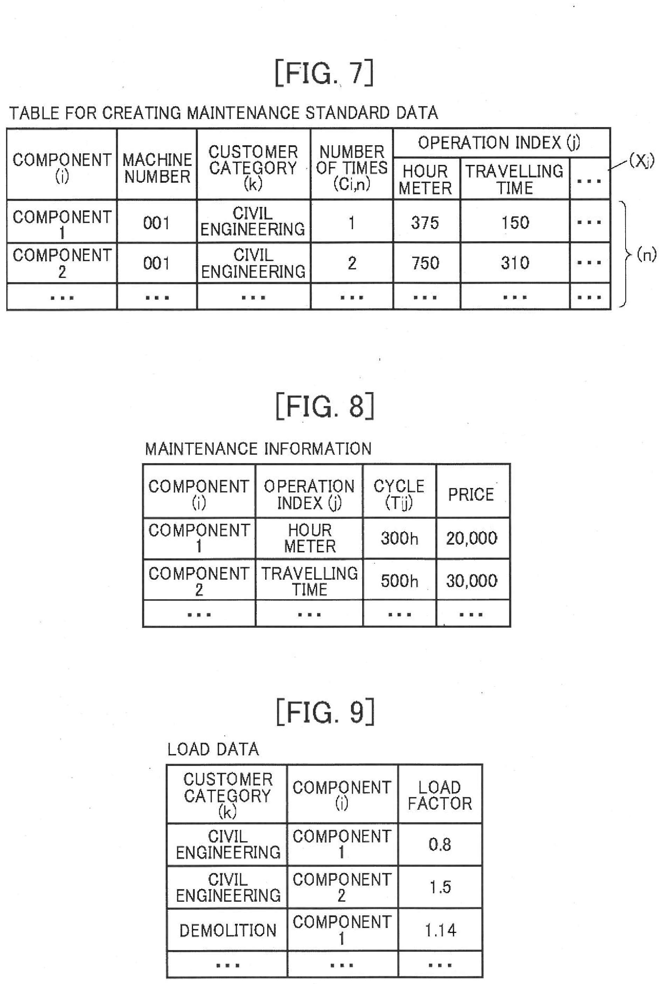

FIG. 7 is a diagram for depicting an example of a data structure of the table for creating maintenance standard data.

As depicted in FIG. 7, on the table for creating maintenance standard data, a component replacement history is recorded by a component, a machine number, and the number of times, and the table for creating maintenance standard data is configured with a component, a machine number, a customer category, the number of times, and an operation index. It should be noted that the "number of times" means the cumulative number of times of component replacements.

Subsequently, in order to compute a standard failure cycle "Ti, j" in a case where a target component is "i" and an operation index is "j," a single regression model in which the number of times in the table for creating maintenance standard data is an objective variable "Ci" and the operation index is an explanatory variable "xj" is created (Step S160).

Since there are a plurality of types of operation indexes "hour meter, travelling time, and the like," single regression models the number of which corresponds to the number of operation indexes are created such as a single regression model using the hour meter as an explanatory variable and a single regression model using the travelling time as an explanatory variable.

Subsequently, an optimum model is selected from the candidates created in Step S160, a standard value of the failure cycle is computed by using the selected model, and is then output to the maintenance information (Step S170).

That is, in Step S170, when the regression coefficient of a regression model is obtained for the variable of a single regression model by a statistical method, a single regression model having the largest absolute value of the "value t" of a t-test statistic amount is first selected, and the operation index and the regression coefficient "Ti, j" (the standard value of the failure cycle) corresponding to the explanatory variable "xj" of the model are computed (Step S170). Here, the regression coefficient "Ti, j" can be computed by the following (Equation 1).

[Formula 1]

$$T_{i,j} = \frac{\sum_{n=1}^{N} x_{j,n}\, c_{i,n}}{\sum_{n=1}^{N} x_{j,n}^2} \qquad \cdots \text{(Equation 1)}$$

It should be noted that in the above (Equation 1), the subscript "n" corresponds to each record of the table for creating maintenance standard data.

In addition, the computed standard value of the failure cycle and the operation index are recorded in the maintenance information 113.

FIG. 8 is a diagram for depicting an example of a data structure of the maintenance information.

In FIG. 8, the maintenance information 113 means that, for example, the standard value of the failure cycle of a "component 1" is "300 h" and the "hour meter" is used as the operation index.

Subsequently, in a case where the customer category is "k," the failure cycle "Ti, k" of a target component "i" is computed for each k, and thus a single regression model in which the number of times in the table for creating maintenance standard data is an objective variable "Ci, k" and the operation index selected in Step S8 is an explanatory variable "x" is created for each customer category (Step S180).

Since there are a plurality of types of customer categories "civil engineering, demolition, and the like," single regression models the number of which corresponds to the number of customer categories are created such as a single regression model for civil engineering and a single regression model for demolition. Here, the regression coefficient "Ti, k" can be computed by the following (Equation 2).

[Formula 2]

$$T_{i,k} = \frac{\sum_{n=1}^{N} x_{\,n}\, c_{i,k,n}}{\sum_{n=1}^{N} x_{n}^2} \qquad \cdots \text{(Equation 2)}$$

In addition, in Step S180, a load factor is computed by the ratio "Ti, j ÷ Ti, k" between Equation 1 and Equation 2, and stored in the load data 114.

FIG. 9 is a diagram for depicting an example of a data structure of the load data.

As depicted in FIG. 9, the load data 114 is computed for each customer category and each component. For example, the load factor "0.8" of a "component 1" in the customer category "civil engineering" in the first record means 1.25 (= 1 ÷ 0.8) times longer relative to the standard failure cycle.

Subsequently, it is determined whether or not the processing of Steps S160 to S190 has been repeated for the number of types of components, that is, whether or not the processing of Steps S160 to S190 has been completed for all the types of components (Step S200), and when the determination result is NO, the processing of Steps S160 to S190 is repeated until the determination result becomes YES.

In addition, when the determination result in Step S200 is YES, a subroutine is subsequently called to create an inspection plan (Step S210).

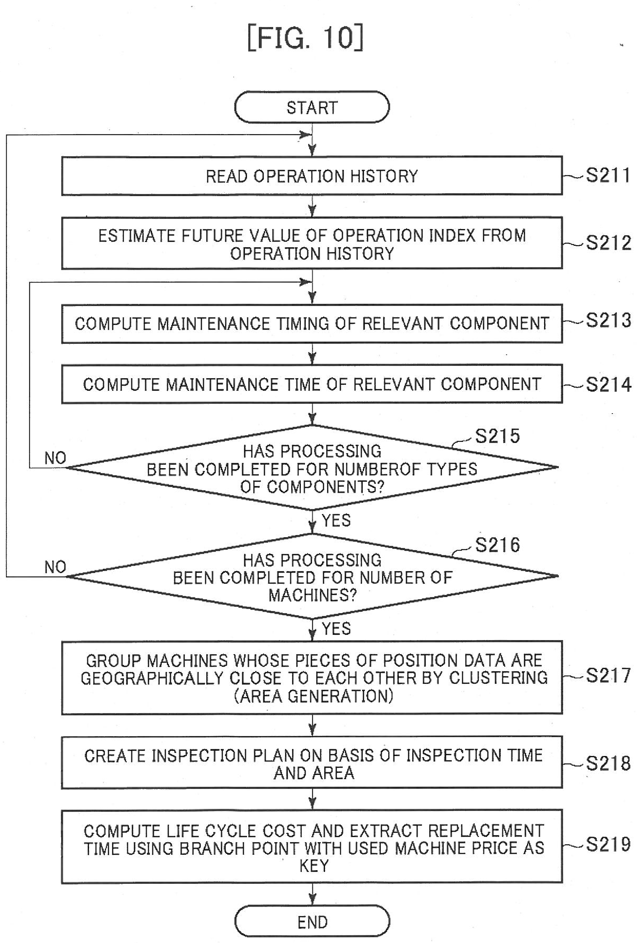

FIG. 10 is a flowchart for depicting processing contents of an inspection plan creation subroutine.

In the inspection plan creation subroutine (Step S210 in FIG. 7) in FIG. 10, the operation history 111 is first read (Step S211), and then the date when the operation index reaches a predetermined value is estimated for each machine number by using the date (current date) and the value of the operation index in the record corresponding to the latest date of the operation history 111 (Step S212). The estimation (computation) of the date in Step S212 can be performed, for example, by the following (Equation 3).

[Formula 3] (Estimated date) = (Current date) + (Predetermined operation index value - current operation index value)/(operation index average increase time per day) ... (Equation 3)　　　　(Equation 3)

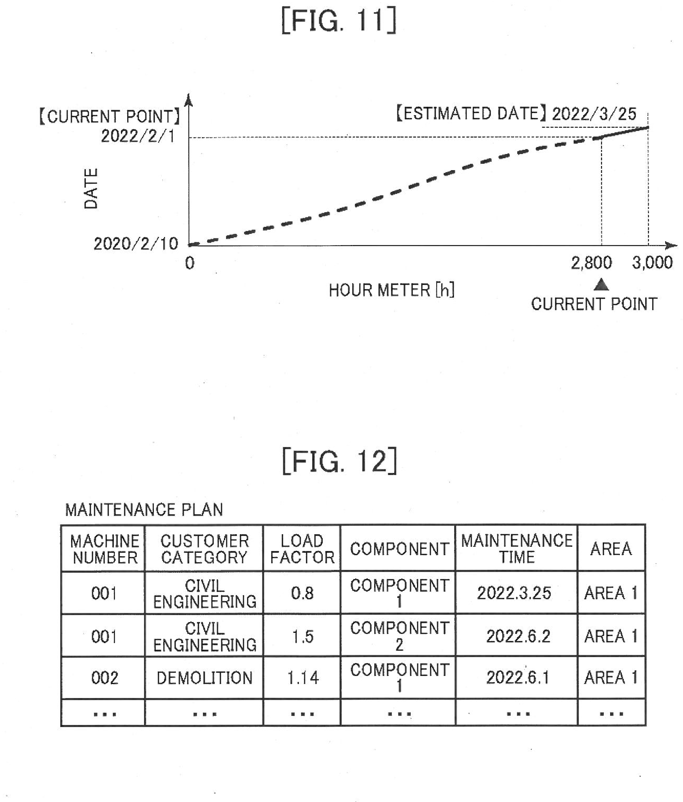

FIG. 11 is a diagram for depicting an example of an estimation result of the date.

FIG. 11 depicts the estimated result "2022/3/25" of the date when the value "2,800 h" of the hour meter at the current point "2022/2/1" in a machine number "001" reaches "3,000 h." By estimating the date in this way, the date when the operation index reaches a predetermined value can be obtained for each machine number.

Subsequently, the maintenance timing of the component is computed (Step S213).

In Step S213, in order to compute the maintenance timing of the component, a component "component 1, component 2, and the like" corresponding to the machine number "001" is first extracted from the maintenance information 113 and a load factor corresponding to the customer category "civil engineering" (machine identification information) of the machine is extracted from the load data 114. The extracted component is defined as "i," the customer category is defined as "k," the load factor corresponding to the component "i" and the customer category "k" is defined as "load factor i, k," and a standard value "Ti" of the failure cycle corresponding to the component "i" is extracted from the "cycle" column of the maintenance information 113. For example, in the case of the component 1, "Ti" is equal to "300 h." By substituting the extracted Ti "300 h" and the load factor i "0.8" into the following (Equation 4), the failure cycle Ti, k "375 h" of the component 1 in the "civil engineering" can be computed.

[Formula 4]

$$T_{i,k} = \frac{T_i}{\text{Load factor}_i} \quad \text{... (Equation 4)}$$

Subsequently, the next maintenance timing Mi, k "3,000 h" of the component 1 is computed from the following (Equation 5) by using the computed failure cycle Ti, k "375 h" and the value "2,800 h" of the hour meter at the current point.

[Formula 5]

$$M_{i,k} = RoundDown \left( \frac{\text{Current operation index value}}{T_{i,k}} + 1 \right) \times T_{i,k} \quad \text{... (Equation 5)}$$

Subsequently, the maintenance time of the component is computed (Step S214).

That is, in Step S214, the maintenance time when the operation index value of the machine reaches the maintenance timing Mi, k "3,000 h" is computed by using the above (Equation 3).

As depicted in FIG. 11, the maintenance time when the maintenance timing Mi, k "3,000 h" is reached is "2022/3/25." The computed maintenance time is recorded in the maintenance plan 115.

FIG. 12 is a diagram for depicting an example of a data structure of the maintenance plan.

As depicted in FIG. 12, the maintenance plan 115 is configured with a machine number, a customer category, a load factor, a component, a maintenance time, and an area. It should be noted that since the execution result of the subsequent processing (Step S217) is stored in the "area" column, "-" is registered at this time.

Subsequently, it is determined whether or not the processing of Steps S213 to S214 has been repeated for the number of types of components, that is, whether or not the processing of Steps S213 to S214 has been completed for all the types of components (Step S215), and when the determination result is NO, the processing of Steps S213 to S215 is repeated until the determination result becomes YES.

In addition, when the determination result in Step S215 is YES, it is then determined whether or not the processing of Steps S211 to S215 has been repeated for the number of machines, that is, whether or not the processing of Steps S211 to S215 has been completed for all the machines (Step S216), and when the determination result is NO, the processing of Steps S211 to S216 is repeated until the determination result becomes YES.

Thus, by repeating the processing from Step S211 to Step S216 for each machine and each type of component, it is possible to obtain a maintenance time for each component in all the machines.

In addition, when the determination result in Step S216 is YES, area generation for grouping, by clustering, machines whose pieces of position data are geographically close to each other is then performed (Step S217).

In Step S217, a clustering method by, for example, k-means is used to group the geographically-close machines by areas. Here, the position of the machine is set as "A," the group of machines is set as "G," the number of groups is set as "q," the center coordinate of the group is set as "u," the position A of the machine is set as, for example, the "position" column of the machine identification information 112 as the initial value, the number q of groups is set as "$1+\log_2$ (the number of machines)," and the center coordinate u of the group is set by randomly selecting q units from the "position" column of the machine identification information 112. Subsequently, the machine is assigned to the group having the center coordinate u to which the position thereof is closest, and the center coordinate u of a solution in which the objective function of Equation 6 is minimized is obtained. By reassigning the machine to the group having the center coordinate u closest to that obtained here and repeating this until the value of the objective function of (Equation 6) below does not change, geographically close machines can be grouped for each optimum area. This area information is recorded in the "area" column of the maintenance plan 115.

[Formula 6]

$$\sum_{p=1}^{q} \sum_{A \in G_p} \left\| A - u_p \right\|^2 \quad \text{... (Equation 6)}$$

Subsequently, an inspection plan is created on the basis of the maintenance time computed in Step S214 and the area of the machine identification information 112 (Step S218) .

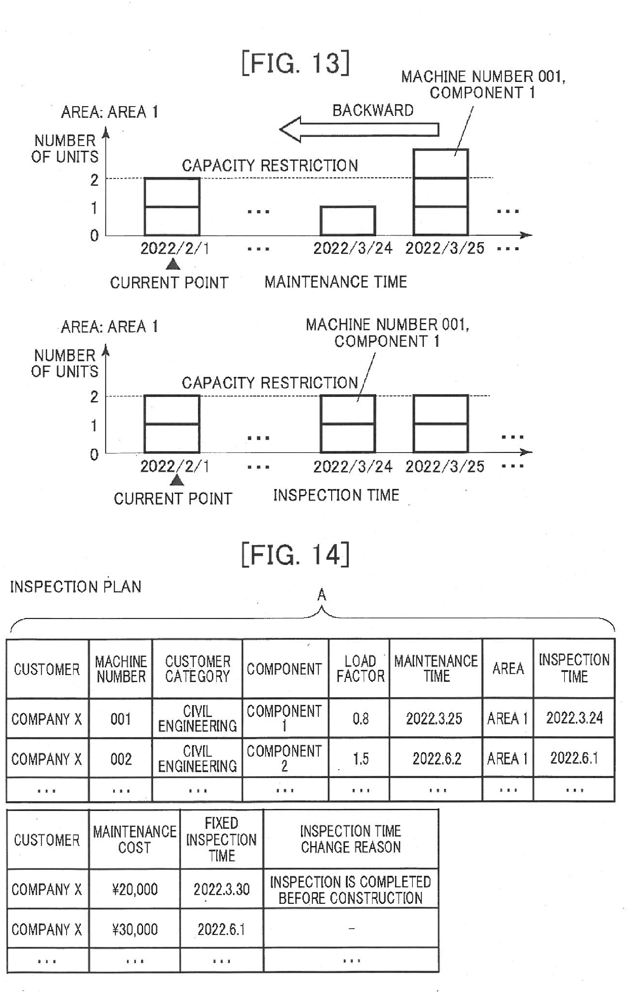

FIG. 13 is a diagram for schematically depicting an example of an inspection plan creation method.

In FIG. 13, an example of the inspection plan creation method in an "area 1" will be described. First, records in which the "area 1" is registered in the area column of the maintenance plan 115 are extracted and stacked for each maintenance time (date). For example, the records of the component 1 of the machine number "001" in FIG. 12 are stacked as a maintenance time of "2022/3/25." Here, in a case where the capacity restriction per day in the "area 1" is 2 units, unstacking is performed in a backward direction from the future to the current point in order to move the machine exceeding the capacity restriction forward, and the inspection time is decided. The decision result is recorded in the inspection plan 116.

FIG. 14 is a diagram for depicting an example of a data structure of the inspection plan.

In the inspection plan 116 depicted in FIG. 14, columns of an item group A are recorded in Step S218, and the item group A includes a customer, a machine number, a customer category, a component, a load factor, a maintenance time, an area, and an inspection time (date). Regarding an inspection time and a maintenance time for each machine number and each component, the "machine number," "component," "maintenance time," "inspection time," and "area" are recorded, and as additional information, the "customer," "customer category," and "load factor" are acquired from the machine identification information 112 and the load data 114 and recorded together.

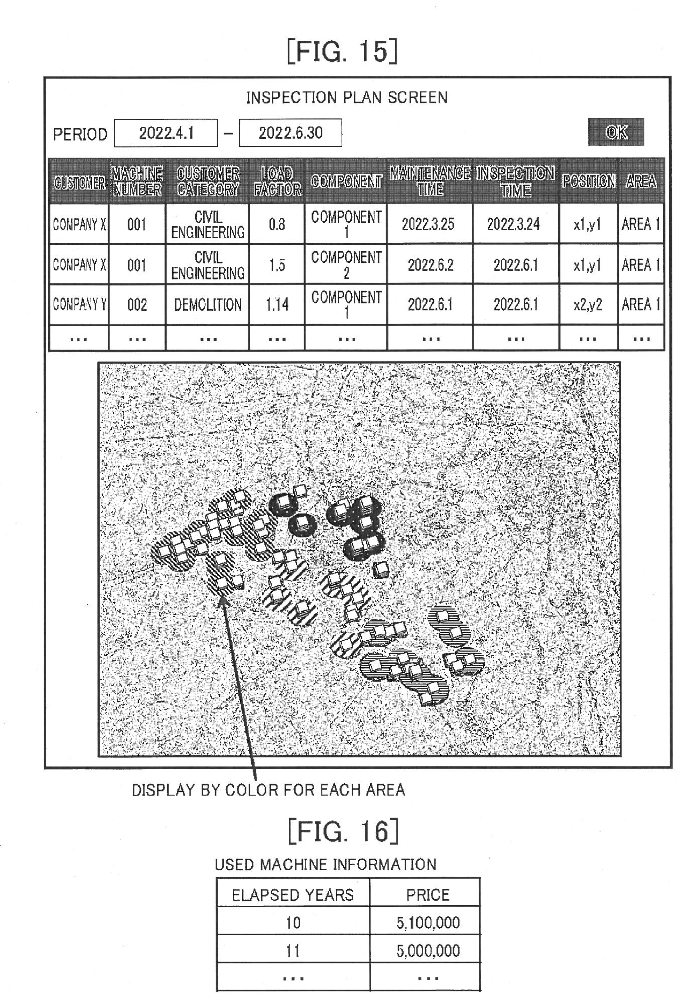

FIG. 15 is a diagram for depicting an example of an inspection plan screen.

By selecting the display period of the inspection plan in an inspection plan screen 141 depicted in FIG. 15, information of the "customer," "machine number," "customer category," "load factor," "component," "maintenance time," "maintenance time," "position," and "area" of the machine to be inspected is extracted from the inspection plan 116 and displayed, and the geographical position of the machine and map information are displayed. The map information is acquired from, for example, the database 104 in cooperation with the map system. Whether the displayed maintenance time is earlier or later than that with the standard way of use can be grasped by checking the load factor. For example, in a case where the load factor exceeds 1, it can be judged that the maintenance time is set earlier because the load is higher than that with the standard way of use.

Subsequently, a life cycle cost is computed, the replacement time is extracted using by referring to the break-even point with a used machine price (Step S219), and the processing is terminated.

The inspection time in the inspection plan screen 141 is a recommended value in the inspection plan creation support device 1, and the actual inspection time requires coordination with the customer. In order to create cost information necessary for the coordination with the customer, the life cycle cost is computed and the used machine information 117 is read in Step S219. Specifically, in order to compute the life cycle cost first, the values in the "maintenance cost" column in the inspection plan 116 are acquired from the "price" column in the maintenance information 113 and recorded. In addition, the used machine information 117 is read, the branch point where the life cycle cost intersects the used machine price is extracted, and the time when the cost rapidly increases immediately before the branch point is set as a machine replacement recommendation time.

FIG. 16 is a diagram for depicting an example of a data structure of used machine information.

The used machine information 117 depicted in FIG. 16 stores price information on used machines according to the number of years that has elapsed since the machines were newly purchased.

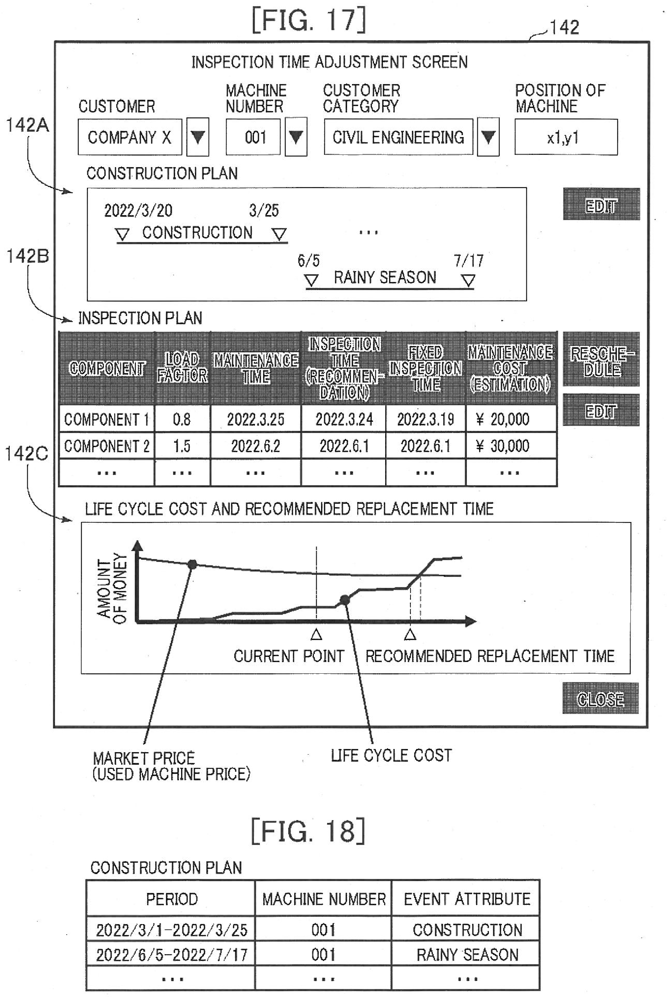

FIG. 17 is a diagram for depicting an example of an inspection time adjustment screen.

By selecting a machine number from the menu on an inspection time adjustment screen 142 depicted in FIG. 17, a construction plan 142A, an inspection plan 142B, and a life cycle cost and recommended replacement time 142C in the machine number are displayed. In the construction plan 142A, a period (start to end) and an event attribute (construction, rainy season, and the like) can be edited, and the edited result is recorded in the construction plan 118.

FIG. 18 is a diagram for depicting an example of a data structure of the construction plan.

The construction plan 118 depicted in FIG. 18 includes a period, a machine number, and an event attribute. Matters to be considered when the customer decides the inspection date (for example, to be inspected before construction or after the rainy season, or the like) are registered in the event attribute.

The inspection plan 142B in the screen in FIG. 17 displays data registered in the inspection plan 116. It should be noted that the "inspection time (recommendation)" in the screen corresponds to the "inspection time" column of the inspection plan 116, and the result of the coordination with the customer is registered in the "fixed inspection time" column of the inspection plan 116. In a case where the dates of the "inspection time (recommendation)" and the "fixed inspection time" are different from each other, the inspection plan creation support device 1 asks the user about the reason and records it in the "inspection time change reason" column. As another mode of the inspection plan creation method, for example, a priority for determining the inspection time (for example, conducting an inspection prior to construction) may be extracted for each customer from the statistics of the adoption rate of the recorded "inspection time change reason" and "inspection time (recommendation)," and an inspection plan that satisfies the priority may be created.

In addition, an estimated value of the future life cycle cost in the machine number, a market price of a used machine, and a recommended replacement time are displayed in the life cycle cost and recommended replacement time 142C. Since replacement of an expensive component occurs in the latter half of the life cycle, the replacement time can be proposed to.a customer who desires replacement.

In the present embodiment configured as described above, an inspection plan creation support device for deciding an inspection time of a machine includes: an input device for inputting machine identification information including a customer category indicating a way of using a machine to be inspected, an operation history in which an operation index including time-series data indicating the operation status of the machine is written, and a maintenance history in which a replacement time of a component and the cumulative number of replaced components are written; a storage device for storing information input by the input device; a computing device for computing an inspection plan of the machine on the basis of the information of the storage device; and an output device for outputting a computation result of the computing device to a terminal device, and the computing device is configured to have: a maintenance standard data computation section that computes a standard value from the cumulative number of replaced components and the operation index, and computes a load factor on the basis of a ratio between a value computed for each customer category from the cumulative number of replaced components and the operation index used for computing the standard value, and the standard value; and an inspection plan creation section that estimates a future operation time for each machine from the operation history, computes a maintenance timing of a component for each customer category from the maintenance history and the ratio, estimates a maintenance time to reach the computed maintenance timing of the component from the future operation time and the maintenance timing of the component, and creates an inspection time on the basis of the estimated maintenance time, so that it is possible to automatically and more accurately create an inspection plan of a machine with high inspection efficiency at an appropriate timing in consideration of the influence of a load caused by a way of using a machine by a customer.

<Supplementary note>

It should be noted that the present invention is not limited to the above-described embodiment, but includes various modified examples and combinations within a range that does not depart from the gist thereof. In addition, the present invention is not limited to those provided with all the configurations described in the above embodiment, but also includes those in which a part of the configurations is deleted. In addition, a part or all of the above-described configurations, functions, and the like may be realized by, for example, designing with integrated circuit. In addition, each of the above-described configurations, functions, and the like may be realized by software such that a processor interprets and executes a program for realizing each function.

Description of Reference Characters

1: inspection plan creation support device
11: storage device
12: computing device
13: input device (input interface)
14: output device (output interface)
102: network
103: user terminal
104: database
110: maintenance history
111: operation history
112: machine identification information
113: maintenance information
114: load data
115: maintenance plan
116: inspection plan
117: used machine information
118: construction plan
121: maintenance standard data computation section
122: maintenance timing computation section
123: operation time prediction section
124: maintenance time prediction section
125: replacement time computation section
126: inspection plan creation section
141: inspection plan screen
142: inspection time adjustment screen
142A: construction plan
142B: inspection plan
142C: recommended replacement time

## Claims

1. An inspection plan creation support device for deciding an inspection time of a machine comprising:

   an input device that inputs machine identification information including a customer category indicating a way of using a machine to be inspected, an operation history in which an operation index including time-series data indicating an operation status of the machine is written, and a maintenance history in which a replacement time of a component and cumulative number of replaced components are written;
   a storage device that stores information input by the input device;
   a computing device that is configured to compute an inspection plan of the machine on a basis of the information of the storage device; and
   an output device that outputs a computation result of the computing device to a terminal device, wherein
   the computing device includes:

      a maintenance standard data computation section that is configured to compute a standard value from the cumulative number of replaced components and the operation index, and compute a load factor on a basis of a ratio between a value computed for each customer category from the cumulative number of replaced components and the operation index used for computing the standard value, and the standard value; and
      an inspection plan creation section that is configured to estimate a future operation time for each machine from the operation history, compute a maintenance timing of a component for each customer category from the maintenance history and the ratio, estimate a maintenance time to reach the computed maintenance timing of the component from the future operation time and the maintenance timing of the component, and create an inspection time on a basis of the estimated maintenance time.

2. The inspection plan creation support device according to claim 1, wherein

the inspection plan creation section is configured to
estimate a future operation time for each machine from the operation history,
compute a maintenance timing of a component for each customer category from the maintenance history and the ratio,
estimate a maintenance time to reach the computed maintenance timing of the component from the future operation time and the maintenance timing of the component, and
create an inspection time on a basis of the estimated maintenance time and area information labeled by geographical proximity from position data of machine identification information.

3. The inspection plan creation support device according to claim 1, wherein

the maintenance standard data computation section is configured to
compute a standard value of a failure cycle from a regression equation having a largest decision coefficient among a plurality of regression equations created from a combination of the cumulative number of replaced components and one or more operation indexes, and
compute a load factor from a ratio between the failure cycle computed for each customer category from the cumulative number of replaced components and the operation index used for computing the standard value, and the standard value.

4. The inspection plan creation support device according to claim 1, wherein

the maintenance standard data computation section is configured to
compute a standard value of a failure cycle by using an average value in a case where all decision coefficients by which a plurality of regression equations are created from a combination of the cumulative number of replaced components and one or more operation indexes are less than a specified value.

5. The inspection plan creation support device according to claim 1, wherein

the storage device stores machine information in which a used machine price of the machine for each elapsed year is written, and
the computing device further includes a replacement time computation section that senses a point at which a life cycle cost rapidly decreases backward, from a price in the maintenance history and a branch point where a life cycle cost obtained by accumulating an estimated value of a maintenance cost for each inspection time and the used machine price for each elapsed year intersect, and uses the point as a recommendation value of a replacement time.

6. The inspection plan creation support device according to claim 5, wherein
the output device outputs, as a computation result of the computing device, at least the customer category, the inspection time, and the replacement time to the terminal device, and causes the terminal device to display them in the same screen thereof.

# [FIG. 1]

# [FIG. 2]

START

READ OPERATION HISTORY — S100

READ OPERATION INDEX — S110

GENERATE NEW OPERATION HISTORY BY COMBINATION (PRODUCT AND RATIO) OF INDEXES. — S120

HAS PROCESSING BEEN COMPLETED FOR ALL RECORDS? — S130
NO
YES

READ MACHINE IDENTIFICATION INFORMATION, OPERATION HISTORY, AND MAINTENANCE HISTORY — S140

GENERATE TABLE FOR CREATING MAINTENANCE STANDARD DATA — S150

CREATE PLURALITY OF CANDIDATES OF STANDARD FAILURE CYCLE ESTIMATION MODEL — S160

SELECT OPTIMUM MODEL FROM CANDIDATES CREATED IN STEP S160, COMPUTE STANDARD VALUE OF FAILURE CYCLE BY USING SELECTED MODEL, AND OUTPUT IT TO MAINTENANCE INFORMATION — S170

COMPUTE VALUE FOR EACH CUSTOMER CATEGORY BY COMBINATION OF CUMULATIVE NUMBER OF REPLACED COMPONENTS AND ONE OR MORE OPERATION INDEXES — S180

COMPUTE LOAD FACTOR FROM RATIO BETWEEN COMPUTATION RESULTS IN STEPS S170 AND S180 AND OUTPUT IT TO LOAD DATA — S190

HAS PROCESSING BEEN COMPLETED FOR NUMBER OF TYPES OF COMPONENTS? — S200
NO
YES

CREATE INSPECTION PLAN — S210

END

# [FIG. 3]

OPERATION HISTORY

| MACHINE NUMBER | DATE | OPERATION INDEX | | |
| --- | --- | --- | --- | --- |
| | | HOUR METER | TRAVELLING TIME | ... |
| 001 | 2020/2/10 | 0 | 0 | ... |
| 001 | 2020/2/11 | 6.4 | 3.10 | ... |
| ... | ... | ... | ... | ... |

# [FIG. 4]

OPERATION HISTORY

| MACHINE NUMBER | DATE | OPERATION INDEX | | | | |
| --- | --- | --- | --- | --- | --- | --- |
| | | HOUR METER | TRAVELLING TIME | ... | HOUR METER $\div$ TRAVELLING TIME | ... |
| 001 | 2020/2/10 | 0 | 0 | ... | N/A | ... |
| 001 | 2020/2/11 | 6.4 | 3.10 | ... | 2.06 | ... |
| ... | ... | ... | ... | ... | ... | ... |

# [FIG. 5]

MACHINE IDENTIFICATION INFORMATION

| MACHINE NUMBER | CUSTOMER | CUSTOMER CATEGORY | POSITION | DATE OF PURCHASE |
| --- | --- | --- | --- | --- |
| 001 | COMPANY X | CIVIL ENGINEERING | x1,y1 | 2020/2/10 |
| 002 | COMPANY Y | DEMOLITION | x2,y2 | 2019/2/20 |
| ... | ... | ... | ... | ... |

# [FIG. 6]

MAINTENANCE HISTORY

| MACHINE NUMBER | DATE | COMPONENT | PRICE |
| --- | --- | --- | --- |
| 001 | 2021/4/8 | COMPONENT 1 | 20,000 |
| 001 | 2021/6/10 | COMPONENT 2 | 30,000 |
| ... | ... | ... | ... |

# [FIG. 7]

TABLE FOR CREATING MAINTENANCE STANDARD DATA

| COMPONENT (i) | MACHINE NUMBER | CUSTOMER CATEGORY (k) | NUMBER OF TIMES $(C_{i,n})$ | OPERATION INDEX (j) | | | |
|---|---|---|---|---|---|---|---|
| | | | | HOUR METER | TRAVELLING TIME | ... | $(X_j)$ |
| COMPONENT 1 | 001 | CIVIL ENGINEERING | 1 | 375 | 150 | ... | |
| COMPONENT 2 | 001 | CIVIL ENGINEERING | 2 | 750 | 310 | ... | (n) |
| ... | ... | ... | ... | ... | ... | ... | |

# [FIG. 8]

MAINTENANCE INFORMATION

| COMPONENT (i) | OPERATION INDEX (j) | CYCLE $(T_{ij})$ | PRICE |
|---|---|---|---|
| COMPONENT 1 | HOUR METER | 300h | 20,000 |
| COMPONENT 2 | TRAVELLING TIME | 500h | 30,000 |
| ... | ... | ... | ... |

# [FIG. 9]

LOAD DATA

| CUSTOMER CATEGORY (k) | COMPONENT (i) | LOAD FACTOR |
|---|---|---|
| CIVIL ENGINEERING | COMPONENT 1 | 0.8 |
| CIVIL ENGINEERING | COMPONENT 2 | 1.5 |
| DEMOLITION | COMPONENT 1 | 1.14 |
| ... | ... | ... |

# [FIG. 10]

START

READ OPERATION HISTORY — S211

ESTIMATE FUTURE VALUE OF OPERATION INDEX FROM OPERATION HISTORY — S212

COMPUTE MAINTENANCE TIMING OF RELEVANT COMPONENT — S213

COMPUTE MAINTENANCE TIME OF RELEVANT COMPONENT — S214

S215
HAS PROCESSING BEEN COMPLETED FOR NUMBER OF TYPES OF COMPONENTS?
NO
YES

S216
HAS PROCESSING BEEN COMPLETED FOR NUMBER OF MACHINES?
NO
YES

GROUP MACHINES WHOSE PIECES OF POSITION DATA ARE GEOGRAPHICALLY CLOSE TO EACH OTHER BY CLUSTERING (AREA GENERATION) — S217

CREATE INSPECTION PLAN ON BASIS OF INSPECTION TIME AND AREA — S218

COMPUTE LIFE CYCLE COST AND EXTRACT REPLACEMENT TIME USING BRANCH POINT WITH USED MACHINE PRICE AS KEY — S219

END

[FIG. 11]

[FIG. 12]

MAINTENANCE PLAN

| MACHINE NUMBER | CUSTOMER CATEGORY | LOAD FACTOR | COMPONENT | MAINTENANCE TIME | AREA |
|---|---|---|---|---|---|
| 001 | CIVIL ENGINEERING | 0.8 | COMPONENT 1 | 2022.3.25 | AREA 1 |
| 001 | CIVIL ENGINEERING | 1.5 | COMPONENT 2 | 2022.6.2 | AREA 1 |
| 002 | DEMOLITION | 1.14 | COMPONENT 1 | 2022.6.1 | AREA 1 |
| ... | ... | ... | ... | ... | ... |

## EP 4 776 201 A1

## [FIG. 13]

AREA: AREA 1

BACKWARD

MACHINE NUMBER 001,
COMPONENT 1

NUMBER OF UNITS

CAPACITY RESTRICTION

2
1
0

2022/2/1 ... 2022/3/24 2022/3/25 ...

CURRENT POINT     MAINTENANCE TIME

AREA: AREA 1

MACHINE NUMBER 001,
COMPONENT 1

NUMBER OF UNITS

CAPACITY RESTRICTION

2
1
0

2022/2/1 ... 2022/3/24 2022/3/25 ...

CURRENT POINT     INSPECTION TIME

## [FIG. 14]

INSPECTION PLAN

A

| CUSTOMER | MACHINE NUMBER | CUSTOMER CATEGORY | COMPONENT | LOAD FACTOR | MAINTENANCE TIME | AREA | INSPECTION TIME |
|---|---|---|---|---|---|---|---|
| COMPANY X | 001 | CIVIL ENGINEERING | COMPONENT 1 | 0.8 | 2022.3.25 | AREA 1 | 2022.3.24 |
| COMPANY X | 002 | CIVIL ENGINEERING | COMPONENT 2 | 1.5 | 2022.6.2 | AREA 1 | 2022.6.1 |
| ... | ... | ... | ... | ... | ... | ... | ... |

| CUSTOMER | MAINTENANCE COST | FIXED INSPECTION TIME | INSPECTION TIME CHANGE REASON |
|---|---|---|---|
| COMPANY X | ¥20,000 | 2022.3.30 | INSPECTION IS COMPLETED BEFORE CONSTRUCTION |
| COMPANY X | ¥30,000 | 2022.6.1 | – |
| ... | ... | ... | ... |

17

# [FIG. 15]

## INSPECTION PLAN SCREEN

PERIOD [ 2022.4.1 ] – [ 2022.6.30 ]          OK

| CUSTOMER | MACHINE NUMBER | CUSTOMER CATEGORY | LOAD FACTOR | COMPONENT | MAINTENANCE TIME | INSPECTION TIME | POSITION | AREA |
|---|---|---|---|---|---|---|---|---|
| COMPANY X | 001 | CIVIL ENGINEERING | 0.8 | COMPONENT 1 | 2022.3.25 | 2022.3.24 | x1,y1 | AREA 1 |
| COMPANY X | 001 | CIVIL ENGINEERING | 1.5 | COMPONENT 2 | 2022.6.2 | 2022.6.1 | x1,y1 | AREA 1 |
| COMPANY Y | 002 | DEMOLITION | 1.14 | COMPONENT 1 | 2022.6.1 | 2022.6.1 | x2,y2 | AREA 1 |
| ... | ... | ... | ... | ... | ... | ... | ... | ... |

DISPLAY BY COLOR FOR EACH AREA

# [FIG. 16]

USED MACHINE INFORMATION

| ELAPSED YEARS | PRICE |
|---|---|
| 10 | 5,100,000 |
| 11 | 5,000,000 |
| ... | ... |

## [FIG. 17]

142

**INSPECTION TIME ADJUSTMENT SCREEN**

142A

| CUSTOMER | MACHINE NUMBER | CUSTOMER CATEGORY | POSITION OF MACHINE |
|---|---|---|---|
| COMPANY X ▼ | 001 ▼ | CIVIL ENGINEERING ▼ | x1,y1 |

CONSTRUCTION PLAN

EDIT

2022/3/20     3/25
▽ CONSTRUCTION ▽    ...

142B

    6/5     7/17
▽ RAINY SEASON ▽

INSPECTION PLAN

| COMPONENT | LOAD FACTOR | MAINTENANCE TIME | INSPECTION TIME (RECOMMEN- DATION) | FIXED INSPECTION TIME | MAINTENANCE COST (ESTIMATION) | RESCHE- DULE |
|---|---|---|---|---|---|---|
| COMPONENT 1 | 0.8 | 2022.3.25 | 2022.3.24 | 2022.3.19 | ¥ 20,000 | EDIT |
| COMPONENT 2 | 1.5 | 2022.6.2 | 2022.6.1 | 2022.6.1 | ¥ 30,000 | |
| ... | ... | ... | ... | ... | ... | |

142C

LIFE CYCLE COST AND RECOMMENDED REPLACEMENT TIME

AMOUNT OF MONEY

△ CURRENT POINT    △ RECOMMENDED REPLACEMENT TIME

CLOSE

MARKET PRICE (USED MACHINE PRICE)

LIFE CYCLE COST

## [FIG. 18]

CONSTRUCTION PLAN

| PERIOD | MACHINE NUMBER | EVENT ATTRIBUTE |
|---|---|---|
| 2022/3/1-2022/3/25 | 001 | CONSTRUCTION |
| 2022/6/5-2022/7/17 | 001 | RAINY SEASON |
| ... | ... | ... |

## INTERNATIONAL SEARCH REPORT

| International application No. |
|---|
| **PCT/JP2024/031500** |

| **A.** | **CLASSIFICATION OF SUBJECT MATTER** |
|---|---|

*G06Q 10/20*(2023.01)i; *G06Q 50/08*(2012.01)i
FI:  G06Q10/20; G06Q50/08

According to International Patent Classification (IPC) or to both national classification and IPC

| **B.** | **FIELDS SEARCHED** |
|---|---|

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2022/209167 A1 (HITACHI CONSTRUCTION MACHINERY CO., LTD.) 06 October 2022 (2022-10-06)<br>entire text, all drawings | 1-6 |
| A | JP 2017-138896 A (RICOH COMPANY, LTD.) 10 August 2017 (2017-08-10)<br>entire text, all drawings | 1-6 |
| A | JP 2017-91289 A (MITSUBISHI HITACHI POWER SYSTEMS, LTD.) 25 May 2017 (2017-05-25)<br>entire text, all drawings | 1-6 |
| A | JP 2017-8524 A (HITACHI CONSTRUCTION MACHINERY CO., LTD.) 12 January 2017 (2017-01-12)<br>entire text, all drawings | 1-6 |
| A | JP 2013-61819 A (HITACHI, LTD.) 04 April 2013 (2013-04-04)<br>entire text, all drawings | 1-6 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/031500**

| C. DOCUMENTS CONSIDERED TO BE RELEVANT | | |
|---|---|---|
| Category* | Citation of document, with indication, where appropriate, of the relevant passages | Relevant to claim No. |
| A | JP 2013-33431 A (MITSUBISHI HEAVY INDUSTRIES, LTD.) 14 February 2013 (2013-02-14)<br>entire text, all drawings | 1-6 |
| A | JP 2007-100305 A (KOMATSU LTD.) 19 April 2007 (2007-04-19)<br>entire text, all drawings | 1-6 |
| A | JP 2002-117164 A (KOMATSU LTD.) 19 April 2002 (2002-04-19)<br>entire text, all drawings | 1-6 |

Form PCT/ISA/210 (second sheet) (July 2022)

## INTERNATIONAL SEARCH REPORT
### Information on patent family members

International application No.

**PCT/JP2024/031500**

| Patent document cited in search report | Publication date (day/month/year) | Patent family member(s) | Publication date (day/month/year) |
|---|---|---|---|
| WO 2022/209167 A1 | 06 October 2022 | US 2023/0333549 A1 entire text, all drawings EP 4318339 A1 CN 115917565 A KR 10-2023-0042363 A | |
| JP 2017-138896 A | 10 August 2017 | US 2017/0230521 A1 entire text, all drawings EP 3203423 A1 | |
| JP 2017-91289 A | 25 May 2017 | JP 5940724 B1 entire text, all drawings | |
| JP 2017-8524 A | 12 January 2017 | US 2018/0051442 A1 entire text, all drawings WO 2016/203795 A1 EP 3312779 A1 EP 4386699 A2 KR 10-2017-0108991 A CN 107408227 A | |
| JP 2013-61819 A | 04 April 2013 | WO 2013/038785 A1 entire text, all drawings | |
| JP 2013-33431 A | 14 February 2013 | (Family: none) | |
| JP 2007-100305 A | 19 April 2007 | US 2009/0259507 A1 entire text, all drawings WO 2007/037400 A1 CA 2623640 A1 AU 2006295772 A1 | |
| JP 2002-117164 A | 19 April 2002 | (Family: none) | |

Form PCT/ISA/210 (patent family annex) (July 2022)

**EP 4 776 201 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009251822 A